# EUROPÄISCHE PATENTSCHRIFT

(11) **EP 2 329 165 B1**
(45) Veröffentlichungstag und Bekanntmachung des Hinweises auf die Patenterteilung: **19.09.2012**
(21) Anmeldenummer: 09776902.0
(22) Anmeldetag: 01.07.2009
(51) Int. Cl.: F16D 55/22, F16D 65/18

(54) **BREMSE**
BRAKE
FREIN

(30) Priorität: 29.09.2008 DE 102008049239
(43) Veröffentlichungstag der Anmeldung: 08.06.2011
(73) Patentinhaber: WABCO GmbH, 30453 Hannover (DE)
(72) Erfinder: BEIER, Peter, 31515 Wunstorf (DE); BRUNS, Gerhard, 30451 Hannover (DE); JANTZ, Olaf, 30455 Hannover (DE); ROSENDAHL, Hartmut, 30167 Hannover (DE)
(74) Vertreter: Lauerwald, Jörg
(86) Internationale Anmeldenummer: PCT/EP2009/004740
(87) Internationale Veröffentlichungsnummer: WO 2010/034366

(56) Entgegenhaltungen:
- DE-A1- 3 230 583
- DE-A1-102006 020 850
- GB-A- 2 096 257
- US-A- 3 367 452

## Beschreibung

Die Erfindung betrifft eine Bremse mit einer Bremsbacke, einem Betätigungselement zum Drücken der Bremsbacke gegen eine Bremsscheibe und mindestens einem Hebel, der so angeordnet ist, dass er eine von der Bremsbacke auf die Bremsscheibe aufgebrachte Bremskraft durch Umlenken einer Tangentialkraft erhöht, die beim Bremsen auf die Bremsbacke wirkt.

Eine gattungsgemäße Bremse ist aus der DE 10 2006 020 850 A1 bekannt. Bei einer solchen Bremse wird eine Primärbremskraft oder Aktuatorkraft von einem Aktuator auf das Betätigungselement aufgebracht, so dass die Bremsbacke gegen die Bremsscheibe gedrückt wird. Sobald die Bremsbacke mit der Bremsscheibe in Kontakt kommt, entsteht eine Tangentialkraft, weil die sich drehende Bremsscheibe die Bremsbacke mitschleift. Diese Tangentialkraft wird von dem Hebel auf das Betätigungselement umgeleitet und wirkt als Sekundärbremskraft oder Hilfskraft, die die Bremsbacke zusätzlich gegen die Bremsscheibe drückt.

Nachteilig an der bekannten Bremse ist, dass zu dem Zeitpunkt, zu dem die Bremsbacke in Kontakt mit der Bremsscheibe gelangt, schlagartig die Tangentialkraft entsteht und die vom Aktuator aufgebrachte Primärbremskraft verstärkt. Soll eine kleine Bremskraft aufgebracht werden, so kann dann der Fall eintreten, dass der Aktuator die Bremsbacke zunächst auf die Bremsscheibe zustellt, diese dann mit der Bremsscheibe in Eingriff kommt, die Tangentialkraft vom Hebel umgeleitet wird und die Bremskraft auf einen Wert verstärkt, der deutlich oberhalb der gewünschten Bremskraft liegen. Daraufhin muss der Aktuator die Bremsbacke von der Bremsscheibe wegbewegen, die Tangentialkraft lässt plötzlich nach und die von der Bremsbacke gegen die Bremsscheibe aufgebrachte Bremskraft sinkt schlagartig auf einen Wert deutlich unterhalb der gewünschten Bremskraft. Dieser Zyklus wiederholt sich und führt zu einer stark schwankenden Bremskraft.

In anderen Worten hat die Funktion, die die Bremskraft (x-Achse), die von der Bremsbacke auf die Bremsscheibe aufgebracht wird, gegen die Primärbremskraft, die der Aktuator auf das Betätigungselement aufbringt (y-Achse), eine Sprungstelle. Soll die Bremskraft linear gesteigert werden, so muss der Aktuator zu einem bestimmten Zeitpunkt eine sich schlagartig ändernde Primärkraft auf das Betätigungselement aufbringen. Im Bereich dieser Sprungstelle kann die Bremse nur unter großem Aufwand so geregelt werden, dass der Komfort eines Fahrzeugs mit einer derartigen Bremse nicht beeinträchtigt wird.

Der Erfindung liegt die Aufgabe zugrunde, eine Bremse vorzuschlagen, die einfacher zu regeln ist.

Die Erfindung löst das Problem durch eine gattungsgemäße Bremse, bei der das Betätigungselement zumindest ein bremsscheibenseitiges Teil, ein aktuatorseitiges Teil und ein zwischen bremsscheibenseitigem Teil und aktuatorseitigem Teil angeordnetes Koppelteil umfasst, wobei das Koppelteil relativ zum bremsscheibenseitigen Teil und/oder zum aktuatorseitigen Teil verschwenkbar ist.

Dieser Aufbau ermöglicht es vorteilhafterweise, dass der Hebel am Koppelteil angreift, so dass dann, wenn die Tangentialkraft auf den Hebel wirkt, dieser das Koppelteil relativ zum bremsscheibenseitigen Teil und/oder aktuatorseitigen Teil verschwenkt, so dass sich der Abstand zwischen dem bremsscheibenseitigen Teil und dem aktuatorseitigen Teil vergrößert. Wegen des sich vergrößernden Abstands drückt das bremsscheibenseitige Teil die Bremsbacke weiter in Richtung Bremsscheibe und erhöht so die Bremskraft.

Weil das Koppelteil verschwenkbar ist, verändert sich der Abstand zwischen bremsscheibenseitigem Teil und aktuatorseitigem Teil zum Beginn des Eingriffs zwischen Bremsbacke und Bremsscheibe nur um einen sehr kleinen Teil. Das bedeutet, dass die verstärkende Wirkung des Hebels zu Beginn des Eingriffs durch das Verschwenken des Koppelteils abgeschwächt wird und die bremskraftverstärkende Wirkung des Hebels erst allmählich mit zunehmender Auslenkung des Hebels einsetzt. Die Kurve, die die Primärbremskraft, die der Aktuator auf das aktuatorseitige Teil aufbringen muss, gegen die gewünschte Bremskraft zwischen Bremsbacke und Bremsscheibe aufträgt, besitzt dadurch keine Sprungstelle mehr. Dadurch wird die Bremse leichter steuer- bzw. regelbar.

Es ist ein weiterer Vorteil, dass nur wenig zusätzliche Bauteile nötig sind, um den Vorteil der besseren Regelbarkeit zu erreichen.

Im Rahmen der vorliegenden Beschreibung bezieht sich der Begriff des bremsscheibenseitigen Teils bzw. des aktuatorseitigen Teils auf die kinematische Kette der Übertragung der Bremskraft von einem Aktuator, der eine Kraft auf das aktuatorseitige Teil ausübt, auf die Bremsbacke. In der Regel befindet sich das bremsscheibenseitige Teil auch näher bei der Bremsscheibe als das aktuatorseitige Teil, das ist aber nicht notwendig.

Unter dem Merkmal, dass das bremsscheibenseitige Teil, das aktuatorseitige Teil und das Koppelteil verschwenkbar miteinander verbunden sind, ist zu verstehen, dass der Aufbau eine entsprechende Schwenkbewegung erlaubt. Dazu ist es möglich, nicht aber notwendig, dass die drei Teile über feste Lager miteinander verbunden sind. Es ist vielmehr günstig, Außenbereiche der Teile so zu konturieren, dass die Teile aneinander gelagert sind, ohne dass zusätzliche Lager, beispielsweise Kugellager, notwendig sind. Das bremsscheibenseitige Teil, das aktuatorseitige Teil und das Koppelteil können ihrerseits aus zwei oder mehr Teilelementen bestehen.

Gemäß einer bevorzugten Ausführungsform sind das bremsscheibenseitige Teil, das aktuatorseitige Teil und das Koppelteil so miteinander verbunden, dass dann, wenn die Bremsbacke bei einem Bremsbeginn in Kontakt mit der Bremsscheibe gelangt und der Hebel die Tangentialkraft zum Verstärken der Bremskraft umlenkt, das Koppelteil relativ zum bremsscheibenseitigen Teil und/oder zum aktuatorseitigen Teil um einen kleinen Winkel verschwenkt. Das Verschwenken führt zu einer Zunahme des Abstands zwischen bremsscheibenseitigem Teil und/oder zum aktuatorseitigem Teil.

Gemäß einer bevorzugten Ausführungsform ist das aktuatorseitige Teil linear geführt und der Hebel greift am Koppelteil an. Auf diese Weise führt ein Verschwenken des Koppelteils zu keinem Verschwenken des aktuatorseitigen Teils und der Aktuator wird geschont.

Bevorzugt ist zudem das bremsscheibenseitige Teil so gelagert, dass das Koppelteil verschwenken kann, im Wesentlichen ohne dass das bremsscheibenseitige Teil relativ zur Bremsscheibe schwenkt. So wird die Bremsbacke gleichmäßig abgenutzt und ein Verklemmen der Bremse wird sicher vermieden.

Gemäß einer bevorzugten Ausführungsform sind das bremsscheibenseitige Teil, das aktuatorseitige Teil und das Koppelteil so mit dem Hebel gekoppelt, dass ein Auslenken des Hebels aus einer Nullstellung um einen kleinen Hebelschwenkwinkel, beispielsweise 1 °, zu einer kleineren Änderung eines Abstandes zwischen bremsscheibenseitigem Teil und aktuatorseitigem Teil führt als ein Auslenken um den gleichen Hebelschwenkwinkel bei bereits ausgelenktem Hebel. In anderen Worten führt das Vorsehen des Koppelteils dazu, dass eine Bewegung des Hebels die Bremskraft dann besonders stark verstärkt, wenn der Hebel bereits ausgelenkt ist, wohingegen die Bremskraft nur wenig verstärkt wird, wenn sich der Hebel nahe seiner Nullstellung befindet. Die Nullstellung ist diejenige Stellung, die der Hebel einnimmt, wenn keine Bremskraft aufgebracht wird.

Bevorzugt sind das bremsscheibenseitige Teil, das aktuatorseitige Teil und das Koppelteil so miteinander verbunden, dass sie jeweils gegeneinander um jeweils weniger als 10° verschwenkbar sind. Es ergibt sich so ein besonders steifer Aufbau der Bremse.

Bevorzugt sind das bremsscheibenseitige Teil, das aktuatorseitige Teil und das Koppelteil so miteinander verbunden, dass sie bei maximaler Bremskraft mehr als 0,1° gegeneinander verschwenkt sind. Auf diese Weise können Fertigungstoleranzen besonders klein gehalten werden.

Bevorzugt ist der Hebel so ausgebildet, dass eine auf das aktuatorseitige Teil aufgebrachte Primärbremskraft, die auch Aktuatorkraft genannt werden könnte, um eine Sekundärbremskraft verstärkt wird, wobei sich die Primärbremskraft und die Sekundärbremskraft zur Bremskraft addieren. Der Hebel besitzt dann beispielsweise ein Hebelverhältnis, das so gewählt ist, dass ein Gleitreibungskoeffizient von 0,6 zwischen der Bremsbacke und der Bremsscheibe zu einer Sekundärbremskraft führt, die kleiner als ist als das Zwanzigfache der Primärbremskraft. Auf diese Weise muss stets eine Primärbremskraft auf das aktuatorseitige Teil aufgebracht werden, um eine Bremskraft zu erzeugen. Es kann also nicht der Fall eintreten, dass sich die Bremse durch übermäßige Rückkopplung festfrisst.

Gemäß einer bevorzugten Ausführungsform ist der Hebel so angeordnet, dass er die Bremskraft durch Umlenken der Tangentialkraft verstärkt, wenn sich die Bremsscheibe relativ zur Bremsbacke in eine ersten Richtung dreht, wobei die Bremse einen zweiten Hebel umfasst, der so angeordnet ist, dass er eine von der Bremsbacke auf die Bremsscheibe aufgebrachte Bremskraft durch Umlenken der Tangentialkraft verstärkt, wenn sich die Bremsscheibe relativ zur Bremsbacke in einer der ersten Richtung entgegengesetzten Richtung dreht. Bevorzugt ist der zweite Hebel so aufgebaut wie der erste Hebel, das ist aber nicht notwendig.

Eine besonders einfache Lagerung ergibt sich, wenn der Hebel bzw. die Hebel eine kreisbogenförmige Außenkontur besitzen und mittels dieser in einem Gehäuse der Bremse gelagert sind. Günstig ist es, wenn die Bremse mit einem Elektroantrieb verbunden ist, so dass diese mit dem Elektroantrieb eine elektromechanische Bremsvorrichtung bildet.

Im Folgenden wird die Erfindung anhand einer exemplarischen Ausführungsform mit Bezug auf die beigefügten Zeichnungen näher erläutert. Dabei zeigt
- Figur 1: eine perspektivische Ansicht eines erfindungsgemäßen Bremssystems mit einer erfindungsgemäßen Bremse,
- Figur 2: das Bremssystem gemäß Figur 1 in einer teilweise aufgebrochenen Ansicht,
- Figur 3: einen Querschnitt durch die Bremse gemäß der Figuren 1 und 2 und
- Figur 4: einen weiteren Schnitt durch die Bremse.

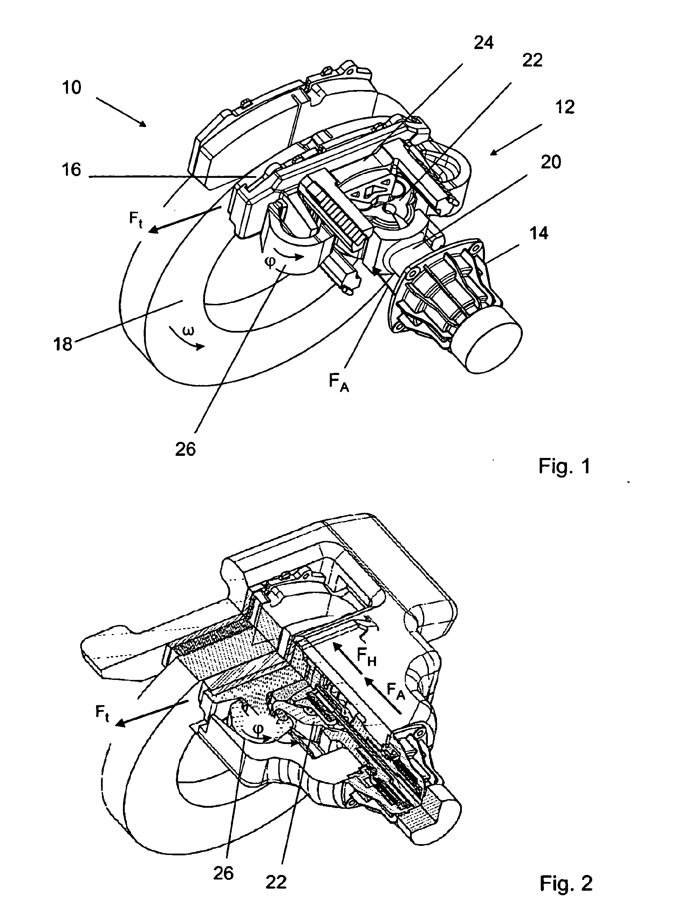

Figur 1 zeigt eine Bremsvorrichtung 10 mit einer Bremse 12, die über einen Aktuator in Form eines Elektroantriebs 14 betätigt wird. Die Bremse 12 besitzt eine Bremsbacke 16, die auf eine Bremsscheibe 18 zugestellt werden kann. Dazu übt der Elektroantrieb 14 eine Primärbremskraft F_{A}, die auch als Aktuatorkraft bezeichnet werden könnte, auf ein aktuatorseitiges Teil 20 aus. Das aktuatorseitige Teil 20 überträgt die Primärbremskraft auf ein Koppelteil 22, das die Primärbremskraft wiederum auf ein bremsscheibenseitiges Teil 24 weiterleitet. Das aktuatorseitige Teil 20, das Koppelteil 22 und das bremsscheibenseitige Teil 24 sind Bestandteile eines Betätigungselements 25.

Dreht die Bremsscheibe 18 mit einer Drehgeschwindigkeit w und kommt die Bremsbacke 16 in Kontakt mit der Bremsscheibe 18, so entsteht eine Tangentialkraft Fₜ. Dadurch verlagert sich die Bremsbacke 16 leicht in die Richtung der Tangentialkraft Fₜ und übt eine Kraft auf einen ersten Hebel 26 aus, der sich daraufhin um einen Hebelschwenkwinkel ϕ verschwenkt.

Figur 2 zeigt, dass der erste Hebel 26 dann eine Kraft auf das Koppelteil 22 ausübt, so dass eine Sekundärbremskraft F_{H}, die auch als Hilfskraft bezeichnet werden könnte, entsteht. Die Sekundärbremskraft F_{H} weist in die gleiche Richtung wie die Primärbremskraft F_{A} und addiert sich mit dieser zur Bremskraft F. Es gilt also F_{A} + F_{H} = F.

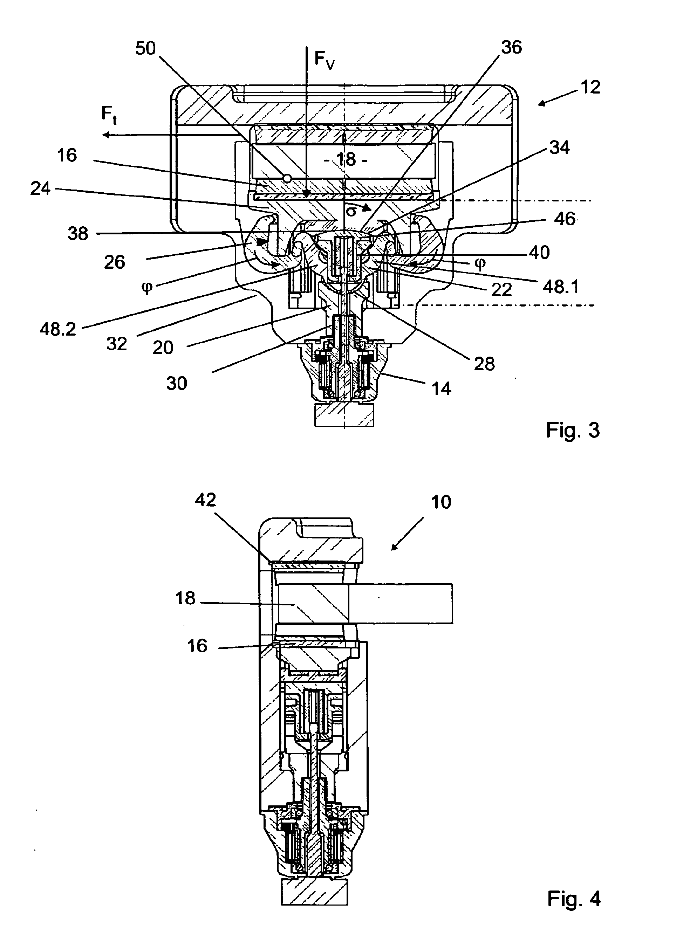

Figur 3 zeigt, dass das Koppelteil 22 über ein Außenlager 28 mit dem aktuatorseitigen Teil 20 verbunden ist, so dass es relativ zu diesem verschwenken kann. Schwenkt der erste Hebel 26 aus seiner Nullstellung um einen kleinen Hebelschwenkwinkel ϕ, so verschwenkt das Koppelteil 22 um einen kleinen Koppelteilschwenkwinkel σ, beispielsweise weniger als 10°, relativ zum aktuatorseitigen Teil 20. Dadurch drückt das Koppelteil 22 das bremsscheibenseitige Teil 16 von sich weg, so dass die Bremsbacke 18 zusätzlich gegen die Bremsscheibe 18 gedrückt wird.

Das aktuatorseitige Teil 20 ist in einer Linearführung 30 an einem Gehäuse 32 der Bremse 12 geführt, so dass keine Kippmomente auf den Elektroantrieb 14 wirken. Das Außenlager 28 ist gebildet durch einen Gelenkkopf, der am Koppelteil 22 ausgebildet ist und mit einer Gelenkpfanne des aktuatorseitigen Teils 20 zusammenwirkt.

Das Koppelteil 22 besitzt auf seiner dem aktuatorseitigen Teil 20 abgewandten Seite einen zweiten Gelenkkopf 34, der mit einer zugehörigen Gelenkpfanne 36 des bremsscheibenseitigen Teils 24 zusammenwirkt und mit diesem ein zweites Außenlager 38 bildet. Schwenkt das Koppelteil 22 um den Koppelteilschwenkwinkel σ aus seiner Nulllage, so führt das dazu, dass sich ein Abstand A zwischen dem aktuatorseitigen Teil 20 und dem bremsscheibenseitigen Teil 24 vergrößert und dadurch die Bremsbacke 16 zusätzlich auf die Bremsscheibe 18 gedrückt wird. Der erste Hebel 26 führt dadurch zusammen mit dem Koppelteil zu einer Verstärkung der Primärbremskraft F_{A}.

Das Koppelteil 22 umfasst ein längenveränderliches Element 40, dass vom Elektroantrieb 14 so ansteuerbar ist, dass es den Abstand A zwischen dem aktuatorseitigen Teil 20 und dem bremsscheibenseitigen Teil 24 vergrößert, so dass ein Verschleiß der Bremsbacke 16 ausgeglichen werden kann.

Figur 4 zeigt einen Querschnitt durch die Bremsvorrichtung 10, in dem auch eine zweite Bremsbacke 42 zu sehen ist, die von der der ersten Bremsbacke 16 abgewandte Seite auf die Bremsscheibe 18 wirkt.

Figur 3 zeigt zudem einen zweiten Hebel 44, der gegenüber dem ersten Hebel 26 angeordnet ist und wie der erste Hebel 26 mit dem Koppelteil 22 zusammenwirkt. Der zweite Hebel 44 hat die gleiche Funktion wie der erste Hebel 26 und wirkt dann, wenn sich die Bremsscheibe 18 mit einer Drehgeschwindigkeit -ω (vgl. Figur 1) dreht. Bezüglich der in Figur 3 gezeigten Symmetrieebene ist die Bremse 12 symmetrisch aufgebaut.

Es ist zu erkennen, dass das Koppelteil 22 einen ersten Schenkel 48.1 und einen zweiten Schenkel 48.2 umfasst, die zueinander spiegelbildlich ausgebildet sind und mit jeweiligen Kopfteilen Teil des Kopflagers 38 sind. Die beiden Schenkel 48.1, 48.2 sind beidseits eines Keilelements 46 angeordnet und können relativ zum Keilelement 46 um einen Winkel, beispielsweise weniger als 10°, verschwenken. Die beiden Schenkel 48.1, 48.2 und das Keilelement 46 bilden eine Wippe, die relativ zum aktuatorseitigen Teil 20 um einen kleinen Winkel schwenken kann.

Das Keilelement 46 ist relativ zu den Schenkeln 48.1, 48.2 so angeordnet, dass eine Vorspannkraft Fᵥ, die auf das bremsscheibenseitige Teilchen 20 wirkt, dazu führt, dass die beiden Schenkel 48.1, 48.2 leicht auseinanderschwenken. Durch dieses Auseinanderschwenken schwenken der erste Hebel 26 und der zweite Hebel 44 entgegen dem in Figur 3 eingezeichneten Hebelschwenkwinkel ϕ so, dass sie vorgespannt an dem bremsscheibenseitigen Teil 24 anliegen.

In Figur 3 nicht eingezeichnet ist ein Vorspannelement zum Vorspannen des bremsscheibenseitigen Teils 24 auf das Koppelteil 22 bzw. über das Koppelteil 22 auf das aktuatorseitige Teil 20. Ein derartiges Vorspannelement ist beispielsweise eine Feder. Es ist ausreichend, wenn die Feder eine Vorspannkraft von weniger als 500 N aufbringt, beispielsweise 100 N. Dadurch, dass das bremsscheibenseitige Teil 24, das Koppelteil 22 und das aktuatorseitige Teil 20 aufeinander vorgespannt sind und das Koppelteil 22 die Hebel 26, 44 auf das bremsscheibenseitige Teil 24 vorspannt, sind alle Bauelemente spielfrei.

Wird nun von dem Aktuator 14 das aktuatorseitige Teil 20 in Richtung auf die Bremsscheiben 18 bewegt, so wird zunächst ein Lüftspiel 50, das in Figur 3 schematisch durch einen Kreis angedeutet ist, überbrückt. Das Lüftspiel beträgt beispielsweise zwischen 0,7 mm und 1,5 mm. Sobald die Bremsbacke 16 mit der Bremsbacke 18 in Kontakt kommt, entsteht die Tangentialkraft Fₜ und wegen der Spielfreiheit entsteht sofort eine kleine Sekundärbremskraft F_{H}.

Diese Sekundärbremskraft F_{H} ist aber klein und wächst stetig und kontinuierlich mit zunehmender Primärbremskraft F_{A}. Es entsteht also - anders als bei bekannten Bremsen - keine sprunghafte Verstärkung der Primärbremskraft, so dass die Bremse besonders gut steuer- bzw. regelbar ist.

## Patentansprüche

1. Bremse mit
(a) einer Bremsbacke (16),
(b) einem Betätigungselement zum Drücken der Bremsbacke (16) gegen eine Bremsscheibe (18) und
(c) mindestens einem Hebel, der so angeordnet ist, dass er eine von der Bremsbacke (16) auf die Bremsscheibe (18) aufgebrachte Bremskraft durch Umlenken einer Tangentialkraft erhöht, die beim Bremsen auf die Bremsbacke (16) wirkt,
**dadurch gekennzeichnet, dass**
(d) das Betätigungselement zumindest ein bremsscheibenseitiges Teil, ein aktuatorseitiges Teil und ein zwischen bremsscheibenseitigem Teil und aktuatorseitigem Teil angeordnetes Koppelteil (22) umfasst,
(e) wobei das Koppelteil (22) relativ zum bremsscheibenseitigen Teil (24) und/oder zum aktuatorseitigen Teil (20) verschwenkbar ist.

2. Bremse nach Anspruch 1, **dadurch gekennzeichnet, dass** das bremsscheibenseitige Teil (24), das aktuatorseitige Teil (20) und das Koppelteil (22) so miteinander verbunden sind, dass
dann, wenn die Bremsbacke (16) bei einem Bremsbeginn in Kontakt mit der Bremsscheibe (18) gelangt und der Hebel die Tangentialkraft (Fₜ) zum Verstärken der Bremskraft (F) umlenkt,
das Koppelteil (22) relativ zum bremsscheibenseitigen Teil (24) und/oder zum aktuatorseitigen (20)Teil um einen kleinen Winkel verschwenkt.

3. Bremse nach einem der vorstehenden Ansprüche, **dadurch gekennzeichnet, dass** das aktuatorseitige Teil (20) linear geführt ist und der Hebel am Koppelteil (22) angreift.

4. Bremse nach Anspruch 3, **dadurch gekennzeichnet, dass** das bremsscheibenseitige Teil (24), das aktuatorseitige Teil (20) und das Koppelelement so mit dem Hebel gekoppelt sind, dass ein Auslenken des Hebels um einen vorgegebenen Hebelschwenkwinkel (ϕ) aus einer Nullstellung zu einer kleineren Änderung eines Abstands (A) zwischen dem bremsscheibenseitigen Teil (24) und dem aktuatorseitigen Teil (20) führt als ein Auslenken um den gleichen Hebelschwenkwinkel (ϕ) bei bereits ausgelenktem Hebel.

5. Bremse nach einem der vorstehenden Ansprüche, **dadurch gekennzeichnet, dass** das bremsscheibenseitige Teil (24), das aktuatorseitige Teil (20) und das Koppelteil (22) so miteinander verbunden sind, dass sie gegeneinander um weniger als 10° verschwenkbar sind.

6. Bremse nach einem der vorstehenden Ansprüche, **dadurch gekennzeichnet, dass** das bremsscheibenseitige Teil (24), das aktuatorseitige Teil (20) und das Koppelteil (22) so miteinander verbunden sind, dass sie gegeneinander um mehr als 0,1 ° verschwenkbar sind.

7. Bremse nach einem der vorstehenden Ansprüche, **dadurch gekennzeichnet, dass**
- der Hebel so angeordnet ist, dass er die Bremskraft (F) durch Umlenken der Tangentialkraft (Fₜ) verstärkt, wenn sich die Bremsscheibe (18) relativ zur Bremsbacke (16) in einer ersten Richtung bewegt und
- die Bremse einen zweiten Hebel (44) umfasst, der so angeordnet ist, dass er eine von der Bremsbacke (16) auf die Bremsscheibe (18) aufgebrachte Bremskraft (F) durch Umlenken der Tangentialkraft (Fₜ) verstärkt, wenn sich die Bremsscheibe (18) relativ zur Bremsbacke (16) in einer der ersten Richtung entgegengesetzten Richtung bewegt.

8. Bremse nach einem der vorstehenden Ansprüche, **dadurch gekennzeichnet, dass** der Hebel (26) bzw. die Hebel (26,44) abschnittsweise eine kreisbogenförmige Außenkontur besitzen und mittels dieser in einem Gehäuse gelagert sind.

9. Bremse nach einem der vorstehenden Ansprüche, **dadurch gekennzeichnet, dass**
- das bremsscheibenseitige Teil (24) mit einer Vorspannkraft (Fᵥ) auf das aktorseitige Teil (20) vorgespannt ist und
- das Koppelteil (22)
ein Keilelement (46) und
zumindest einen Schenkel (48.1, 48.2), insbesondere einen ersten Schenkel (48.1) und einen zweiten Schenkel (48.2), umfasst,
- wobei das Keilelement (46) angeordnet ist, dass es die Vorspannkraft (Fᵥ) so umlenkt, dass der mindestens eine Hebel (26, 44) spielfrei am Koppelteil (22) anliegt.

10. Bremse nach Anspruch 9, **dadurch gekennzeichnet, dass** das Keilelement (46) so angeordnet ist, dass der mindestens eine Hebel (26, 44) spielfrei am bremsscheibenseitigen Teil (24) anliegt.

11. Bremsvorrichtung mit einer Bremse nach einem der vorstehenden Ansprüche und einem Elektroantrieb (14), der mit dem Betätigungselement zum Betätigen der Bremse (12) verbunden ist.

## Claims

1. Brake having
(a) a brake pad (16),
(b) an actuating element for pressing the brake pad (16) against a brake disk (18) and
(c) at least one lever which is arranged such that it increases a braking force imparted by the brake pad (16) to the brake disk (18) by diverting a tangential force which acts on the brake pad (16) during braking,
**characterized in that**
(d) the actuating element comprises at least one brake-disk-side part, an actuator-side part and a coupling part (22) arranged between the brake-disk-side part and the actuator-side part,
(e) with the coupling part (22) being pivotable relative to the brake-disk-side part (24) and/or relative to the actuator-side part (20).

2. Brake according to Claim 1, **characterized in that** the brake-disk-side part (24), the actuator-side part (20) and the coupling part (22) are connected to one another in such a way that,
when the brake pad (16) comes into contact with the brake disk (18) at the start of a braking operation and the lever diverts the tangential force (Fₜ) in order to boost the braking force (F),
the coupling part (22) pivots by a small angle relative to the brake-disk-side part (24) and/or relative to the actuator-side part (20).

3. Brake according to one of the preceding claims, **characterized in that** the actuator-side part (20) is guided linearly and the lever engages on the coupling part (22).

4. Brake according to Claim 3, **characterized in that** the brake-disk-side part (24), the actuator-side part (20) and the coupling element are coupled to the lever in such a way that a deflection of the lever by a predefined lever pivot angle (ϕ) out of a zero position leads to a smaller change in a spacing (A) between the brake-disk-side part (24) and the actuator-side part (20) than a deflection by the same lever pivot angle (ϕ) when the lever is already in a deflected position.

5. Brake according to one of the preceding claims, **characterized in that** the brake-disk-side part (24), the actuator-side part (20) and the coupling part (22) are connected to one another such that they are pivotable relative to one another by less than 10°.

6. Brake according to one of the preceding claims, **characterized in that** the brake-disk-side part (24), the actuator-side part (20) and the coupling part (22) are connected to one another such that they are pivotable relative to one another by more than 0.1°.

7. Brake according to one of the preceding claims, **characterized in that**
- the lever is arranged so as to boost the braking force (F) by diverting the tangential force (Fₜ) when the brake disk (18) is moving relative to the brake pad (16) in a first direction, and
- the brake comprises a second lever (44) which is arranged so as to boost a braking force (F) imparted by the brake pad (16) to the brake disk (18) by diverting the tangential force (Fₜ) when the brake disk (18) is moving relative to the brake pad (16) in a direction opposite to the first direction.

8. Brake according to one of the preceding claims, **characterized in that** the lever (26) or the levers (26, 44) have a circular-arc-shaped outer contour in sections and are mounted by means of said contour in a housing.

9. Brake according to one of the preceding claims, **characterized in that**
- the brake-disk-side part (24) is preloaded against the actuator-side part (20) with a preload force (Fᵥ), and
- the coupling part (22) comprises a wedge element (46) and
at least one leg (48.1, 48.2), in particular a first leg (48.1) and a second leg (48.2),
- with the wedge element (46) being arranged so as to divert the preload force (Fᵥ) in such a way that the at least one lever (26, 44) bears without play against the coupling part (22).

10. Brake according to Claim 9, **characterized in that** the wedge element (46) is arranged in such a way that the at least one lever (26, 44) bears without play against the brake-disk-side part (24).

11. Brake device having a brake according to one of the preceding claims and having an electric drive (14) which is connected to the actuating element in order to actuate the brake (12).

## Revendications

1. Frein équipé :
(a) d'une mâchoire de frein (16) ;
(b) d'un élément d'actionnement servant à comprimer la mâchoire de frein (16) contre un disque de frein (18) ; et
(c) au moins un levier disposé de façon à accroître une force de freinage appliquée par la mâchoire de frein (16) sur le disque de frein (18) par déviation d'une force tangentielle agissant sur la mâchoire de frein (16) lors du freinage ;
**caractérisé en ce que** :
(d) l'élément d'actionnement comprend au moins une partie positionnée du côté du disque de frein, une partie positionnée du côté de l'actionneur et une partie de couplage (22) disposée entre la partie positionnée du côté du disque de frein et la partie positionnée du côté de l'actionneur ;
(e) la partie de couplage (22) pouvant être pivotée par rapport à la partie (24) positionnée du côté du disque de frein et/ou à la partie (20) positionnée du côté de l'actionneur.

2. Frein selon la revendication 1, **caractérisé en ce que** la partie (24) positionnée du côté du disque de frein, la partie (20) positionnée du côté de l'actionneur et la partie de couplage (22) sont reliées de telle sorte entre elles que lorsque la mâchoire de frein (16) entre en contact avec le disque de frein (18) au début d'un processus de freinage et que le levier dévie la force tangentielle (Fₜ) pour amplifier la force de freinage (F), la partie de couplage (22) peut être pivotée d'un petit angle par rapport à la partie (24) positionnée du côté du disque de frein et/ou à la partie (20) positionnée du côté de l'actionneur.

3. Frein selon l'une quelconque des revendications précédentes, **caractérisé en ce que** la partie (20) positionnée du côté de l'actionneur est guidée de façon linéaire et que le levier s'engrène au niveau de la partie de couplage (22).

4. Frein selon la revendication 3, **caractérisé en ce que** la partie (24) positionnée du côté du disque de frein, la partie (20) positionnée du côté de l'actionneur et l'élément de couplage sont couplés de telle sorte avec le levier qu'une déviation du levier d'un angle de pivotement de levier (ϕ) prédéfini provoque en partant d'une position nulle une plus petite variation d'écartement (A) entre la partie (24) positionnée du côté du disque de frein et la partie (20) positionnée du côté de l'actionneur qu'une déviation du même angle de pivotement de levier (ϕ) lorsque le levier est déjà dévié.

5. Frein selon l'une quelconque des revendications précédentes, **caractérisé en ce que** la partie (24) positionnée du côté du disque de frein, la partie (20) positionnée du côté de l'actionneur et la partie de couplage (22) sont reliées entre elles de façon à pouvoir pivoter les unes par rapport aux autres d'un angle inférieur à 10°.

6. Frein selon l'une quelconque des revendications précédentes, **caractérisé en ce que** la partie (24) positionnée du côté du disque de frein, la partie (20) positionnée du côté de l'actionneur et la partie de couplage (22) sont reliées entre elles de façon à pouvoir pivoter les unes par rapport aux autres d'un angle supérieur à 0,1°.

7. Frein selon l'une quelconque des revendications précédentes, **caractérisé en ce que** :
le levier est disposé de façon à amplifier la force de freinage (F) par déviation de la force tangentielle (Fₜ) lorsque le disque de frein (18) se déplace dans une première direction par rapport à la mâchoire de frein (16) ; et
le frein comprend un deuxième levier (44) disposé de façon à amplifier une force de freinage (F) appliquée par la mâchoire de frein (16) sur le disque de frein (18) par déviation de la force tangentielle (Fₜ) lorsque le disque de frein (18) est déplacé dans une direction opposée à la première direction par rapport à la mâchoire de frein (16).

8. Frein selon l'une quelconque des revendications précédentes, **caractérisé en ce que** le levier (26) et/ou les leviers (26, 44) possèdent en partie un contour extérieur en forme de cercle et sont disposés à l'aide de celui-ci dans un carter.

9. Frein selon l'une quelconque des revendications précédentes, **caractérisé en ce que** :
la partie (24) positionnée du côté du disque de frein est précontrainte sur la partie (20) positionnée du côté de l'actionneur par le biais d'une force de précontrainte (Fᵥ) ; et
la partie de couplage (22) comprend un élément de clavette (46) et au moins un côté (48.1, 48.2), notamment un premier côté (48.1) et un deuxième côté (48.2) ;
l'élément de clavette (46) étant disposé de façon à dévier la force de précontrainte (Fᵥ) de façon à ce que l'au moins un levier (26, 44) repose sans jeu contre la partie de couplage (22).

10. Frein selon la revendication 9, **caractérisé en ce que** l'élément de clavette (46) est disposé de façon à ce que l'au moins un levier (26, 44) repose sans jeu contre la partie (24) positionnée du côté du disque de frein.

11. Dispositif de freinage doté d'un frein selon l'une quelconque des revendications précédentes et d'un entraînement électrique (14) relié à l'élément d'actionnement pour réaliser l'actionnement du frein (12).
